# EUROPEAN PATENT APPLICATION

(11) **EP 0 881 504 A2**
(43) Date of publication of application: **02.12.1998**
(21) Application number: 98109619.1
(22) Date of filing: 27.05.1998
(51) Int. Cl.: G01S 5/00

(54) **Device for the automatic transfer of data by means of acoustic signal**

(30) Priority: 28.05.1997 IT FI970125
(71) Applicant: Digicon S.r.l., 54036 Marina di Carrara (Massa Carrara) (IT)
(72) Inventor: Iardella, Vittorio, 54036 Marina di Carrara ( Massa Carrara) (IT); Ravazzano, Fabrizio, Viareggio ( Lucca ) (IT); Vatteroni, Gianlucca, 54036 Marinadi Carrara ( Massa Carrara) (IT)
(74) Representative: Gervasi, Gemma, Dr.

(57) **Abstract**

The present invention refers to a device that enables automatic data transmission, in particular position data processed by a satellite system, via the transformation of the said data into an acoustic signal.

## Description

### Field of invention

The present invention refers to a device that enables transformation of data indicated by a satellite positioning system, and possibly other data supplied by various sources or computers, into acoustic signals, and hence enables their transmission by means of an ordinary telecommunications device without requiring connections by means of transmission cables.

### State of the art

Position-finding systems are known that enable determination with extreme accuracy of the position of an object or person and which are thus of considerable interest in all activities aimed at navigation at sea, in the air, or on land.

In a first case, the remote position-finding systems of known type enable display in an operating centre, on a computer equipped with electronic mapping, of the position of an object, a mobile means, or a person provided with a corresponding peripheral positioning system.

In this case, the communication of the position between the periphery and the operating centre takes place in data mode and in a completely automatic way.

This solution presents the drawback of requiring the use of sophisticated equipment and a cable connection, hence of a direct type, between the peripheral equipment and the communications apparatus which, since it may be of various types, presents different possible types of interface, and consequently entails the adoption of various types of connection cables.

These first systems of remote position-finding are used by organizations and legal entities to provide rescue or information services for persons who are equipped with them, but do not enable location of persons who move freely and independently of an available direct cable connection.

In a second case, organizations or legal entities of this kind may be equipped with operating centres (C.P., M.M., mountain rescue, etc.) which use, for locating persons or means, a communication of the position in voice mode (for example, by means of a cellular mobile telephone, radio telephone, radio or other equivalent means of communication), the data regarding their own geographical position.

A drawback of this second type of systems lies in the fact that, on the part of the person who transmits his own position in voice mode, a certain amount of time is involved for proper reading of the geographical co-ordinates (especially if this occurs in difficult conditions) and for the corresponding voice transmission.

In addition, also on the part of the receiver the understanding of the voice message and the graphical or manual positioning on the map may involve a significant degree of error.

### Detailed description of the invention

The present invention makes it possible to obtain results that are qualitatively comparable to the ones obtainable with cable systems irrespective of the availability of a physical connection, in a relatively economic way and at the same time overcoming the problems of transmission in voice mode. This result has been achieved according to the invention by means of a device that transforms the position data into a coded acoustic signal which may be transmitted and received with extreme facility and without any possibility of errors (since, if the signal is not transmitted correctly, it is not considered valid and is thus rejected), via ordinary telecommunications equipment, and directly decoded by a remote position-finding system located in a receiving operating centre, thus determining the position of the user in a correct way and in the shortest time possible.

The advantage over the existing equipment used in voice mode lies in the fact that the equipment according to the invention renders superfluous voice communication of the position data, with the concomitant potential interpretation problems, and at the same time eliminates the need to transfer them graphically or manually onto a geographical map, thus enabling identification of the position of the user in a shorter time, automatically and without any possibility of error.

The advantage, instead, with respect to current equipment working in data mode lies in avoiding the need to make the various connections using cables, hence rendering the application of the equipment simpler, more economic and universal.

### Description of figures

- Fig. 1 is a schematic representation of a device according to the invention;
- Fig. 2 represents a flowchart of the program performed by the microcomputer of the card for transformation and coding of the data of the device of Fig. 1;
- Fig. 3 is a schematic representation of a microcomputer receiving device to be associated with the device of Fig. 1;
- Fig. 4 presents the flowchart of the program carried out by the microcomputer of the card for transformation and decoding of the data of the device of Fig. 3.

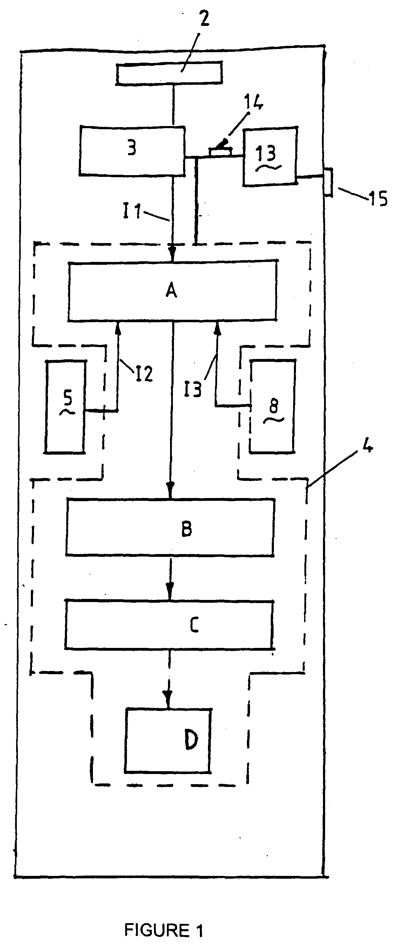

With reference to Fig. 1, the device according to the invention consists of a support 1, a receiving aerial 2, a microcomputer card 3 for processing of the position data, an electronic card 4 for transformation of the above data into an acoustic signal, and a push-button 5 for sending the acoustic signal.

The device is supplied by a power pack 13 connected via an ON/OFF switch 14 to the card 3 and the card 4. The power pack 13 may be equipped with an internal battery or be connected to an external source via an input 15. Advantageously, in the case of an autonomous internal battery, the device is portable and suitable for use as an individual piece of equipment.

The support 1 is basically a parallelepipedal container, possible suitably shaped so as make the overall dimensions of the equipment as small as possible and easier to carry. The support is appropriately shielded to prevent possible interference, and presents an opening at the point where there is a loudspeaker D. In particular, the said opening is preferably provided with a support made of sound-absorbing material to facilitate transmission of the acoustic signal.

The receiving aerial 2 may be either inside or outside the container 1; if it is outside the container 1, it will be connected thereto by means of a cable.

The push-button 5 and the loudspeaker D are of a known type, as also the position-processing card 3 may be of a known type, for example the card produced by the company Trimble under the name SVeeSix-CM3.

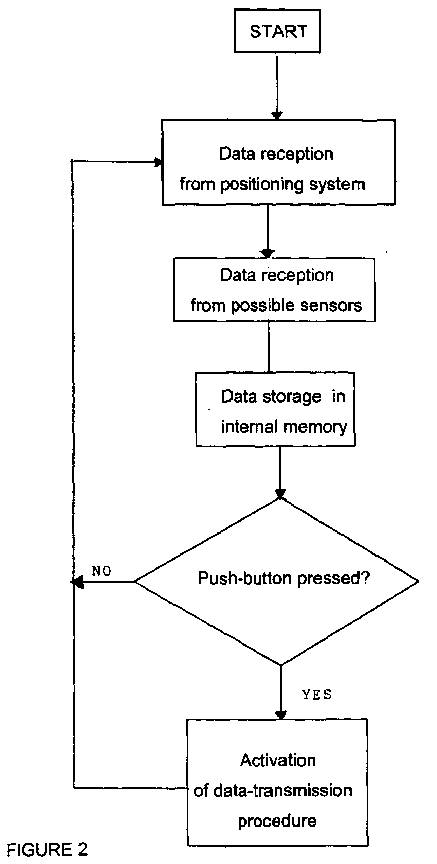

The electronic card 4 consists for example of a microcomputer A provided with a serial input I1 by means of which it receives the data from the positioning card, a digital input I2 by means of which it determines the state of the push-button 5, and seven digital inputs I3 for interfacing possible sensors 8. The microcomputer is moreover connected to the input of a data-transmission device B, for example of the MODEM or DTMF type, the output of which drives the loudspeaker D via an amplifier circuit C. Figure 2 is a schematic illustration of a flowchart of the program carried out by the microcomputer A, in which the data received from the positioning system are processed, suitably coded and stored permanently in memory. Hence, if the push-button 5 is pressed, the subsequent data transmission is activated via the device D.

Obviously, according to the invention other cards similar to the one described are possible, provided they are able to transform the signal received into an acoustic signal suitably coded so as to be able to be decoded by the corresponding receiving system.

In particular, according to the invention, a signal generated by a device of the DTMF or MODEM type is preferred as coded acoustic signal to be transmitted.

As has been said, in addition to the position data supplied by the positioning card to the electronic card 4, other useful data may be sent, for example, measured by the sensors 8, which can be either digital or analog (arterial pressure, pulse, temperature, etc.). The said data may be transmitted to the card 4 by cable transmission; they can then be transformed into the coded acoustic signal and transmitted in a form similar to that of the data supplied by the card 3.

In a second embodiment the device is without the aerial 2 and the card 3, which are replaced by equivalent equipment of a known type, which is installed, for example, on boats of other vehicles. In this case, the card 4 receives, via the input I1, the signal from outside, which is available at the output of the equipment, and processes it as already described previously.

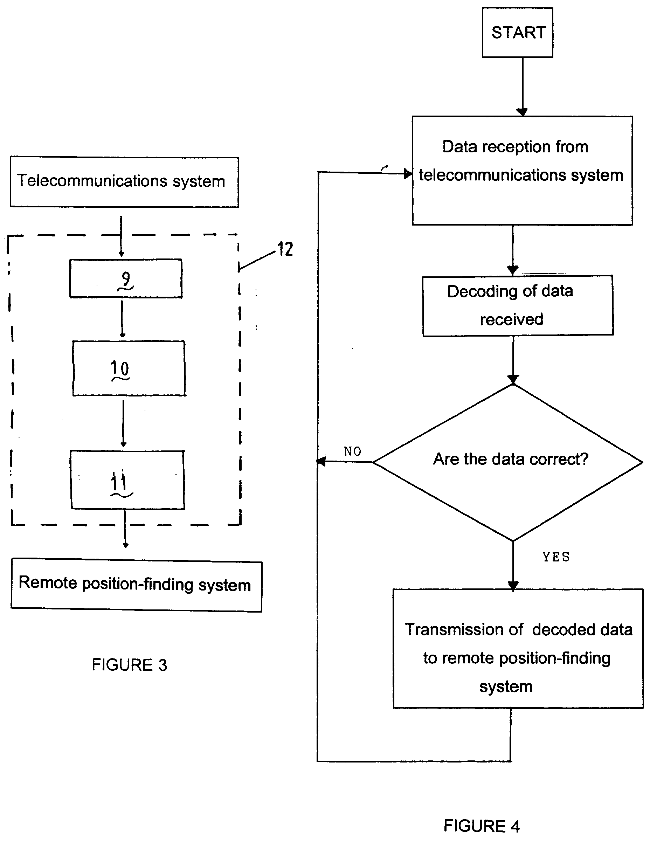

Figure 3 shows a diagram of the receiving device 12, consisting of an interface 9 with the chosen telecommunications system (telephone line, radio, etc.), a data-receiving device 10, and a microcomputer 11 connected to the input of a remote position-finding system.

The microcomputer 11 executes the program shown by the flowchart of Fig. 4, in which the data arriving from the receiving device are decoded, checked on the basis of the type of transmission and preset controlling parameters, and, if correct, sent to the remote position-finding device.

The ease of use of the device according to the invention is evident: for the user it will be sufficient, by means of the telecommunications system in his possession, to activate the acoustic communication with the remote position-finding centre, bring the loudspeaker D up to the microphone of the telecommunications apparatus, and press the push-button 5. The acoustic signal carrying all the necessary information will thus be immediately and automatically transmitted to the remote position-finding operating centre, where it will be received, automatically decoded, and represented graphically and on co-ordinates on the electronic map, thus enabling a prompt and effective intervention.

## Claims

1. Device for the transformation of the data received from a positioning system, and possibly other data received from various sources, into coded acoustic signals.

2. Device according to Claim 1, consisting of a support (1), a receiving aerial (2), an electronic card (3) for processing of the position data, an electronic card (4) for transformation of the above data into an acoustic signal, and a push-button (5) for sending the acoustic signal.

3. Device according to Claim 2, in which the electronic card (4) consists of a microcomputer (A) provided with a data input (I1) from the positioning system, a digital input (I2) by means of which it determines the state of the push-button (5), and seven digital inputs (I3) for interfacing sensors (8), the said microcomputer being in turn connected to the input of a data-transmission device (B), the output of which drives the loudspeaker (D) via an amplifier circuit (C).

4. Device according to Claim 3, in which the support is shielded against possible interference and presents an opening at the point corresponding to the loudspeaker (D).

5. Device according to Claim 4, in which the said opening is shielded with a support of soundproofing material.

6. Device according to Claim 3, in which the coded acoustic signal is a signal generated by a device of the DTMF or MODEM type.

7. Device according to Claim 3, in which the electronic card (3) is able to process the signals transmitted by a GPS or GLONAS positioning system.

8. Device according to Claim 2, in which the data processing card (4) includes an input (I3) by means of which further data, in addition to the position data, are supplied via cable.

9. Device according to Claim 1, in which the aerial (2) may be located either inside or outside the support (1).

10. Device according to Claim 2, in which the said card (4) receives the position data arriving from a card (3) and the corresponding aerial (2) located outside the support (1).

11. Receiver device, consisting of an interface (9) with the chosen telecommunications system (telephone line, radio, etc.), a device for reception of data (10), and a microcomputer (11) connected to the input of a remote position-finding system.

12. Use of a device according to Claim 1 for the transmission with traditional means of telecommunication of the data on the position of the user and other possible data.
